# EUROPEAN PATENT SPECIFICATION

(11) **EP 3 646 727 B1**
(45) Date of publication and mention of the grant of the patent: **07.06.2023**
(21) Application number: 18203464.5
(22) Date of filing: 30.10.2018
(51) Int. Cl.: A01M 23/30, A01M 25/00, A01M 31/00

(54) **BAIT AND/OR TRAP STATION ADAPTED FOR REDUCING NON-TARGET POISONINGS AND BYCATCHES**
ZUR VERRINGERUNG VON NICHTGEZIELTEN VERGIFTUNGEN ODER BEIFÄNGEN ANGEPASSTE KÖDER- UND/ODER FALLENSTATION
APPÂT ET/OU STATION DE PIÈGE ADAPTÉ POUR RÉDUIRE LES INTOXICATIONS ET DES CAPTURES NON CIBLÉES

(43) Date of publication of application: 06.05.2020
(73) Proprietor: Camro A/S, 9610 Nørager (DK)
(72) Inventor: Sørensen, Kurt, 9610 Nørager (DK)
(74) Representative: Larsen & Birkeholm A/S

(56) References cited:
- EP-A1- 3 473 090
- WO-A1-2015/077567
- DE-T2- 69 805 625
- US-A1- 2012 174 469

## Description

### Technical field of the invention

The present invention relates to the field of bait and/or trap stations, especially for rats and mice.

### Background of the invention

Bait stations in the form of enclosed units containing poisoned bait are commonly used for killing rats and mice. The rat or mouse enters the bait station, eats the bait and dies three to five days later. A problem with existing bait stations is that they are susceptible to poisoning of non-target animals, such as birds, lizards, snakes, snails, kittens, or the like.

Inherent flaws in the basic design of snap-traps to date create problems with non-target bycatch issues, when birds, lizards, snakes, kittens, etc. are caught in traps set for pests, inciting negative public reaction. Other types of traps, such as live capture cage traps and leg-hold traps, have the disadvantage of being much bulkier and/or of heavy construction. They merely restrain rather than kill the animals, and unless checked regularly at short time intervals will cause captured animals unnecessary stress and suffering.

As concern for animal rights grows worldwide, and international animal welfare regulations become more stringent, particularly in relation to perceived indiscriminate use of toxins and inefficient traps, the number and type of traps available is diminishing.

US2012174469 discloses a rodent station for capturing or trapping mice, rats or other rodents. The rodent station may provide one or more rodent entry points and is sized to receive one or more rodent suppression devices, such as conventional snap traps, ramp traps, glue boards, etc. The rodent station may present a high contrast entrance that is relatively darker than the station enclosure. The station opening size may be adjustable to accommodate both mice and/or rats.

### Object of the Invention

The objective of the present invention is to provide a bait and/or trap station adapted for reducing non-target poisonings or bycatches.

### Description of the Invention

A first aspect of the present invention relates to a bait and/or trap station comprising:
- a housing with a feeding and/or trap compartment with an entry opening of a first type;

wherein the bait and/or trap station further comprises an a first insert plate having a cut-out sized and shaped to prevent a specific target species from passing therethrough, and at the same time allowing other species to pass; wherein the entry opening of a first type comprises a first retaining means adapted for removably receiving the first insert plate across the entry opening of a first type;
wherein said housing comprises a first and a second feeding and/or trap compartment, each with respective entry openings of a first type; wherein each opening of a first type comprises a first retaining means adapted for removably receiving the first insert plate across the entry opening of a first type;
wherein said housing further comprises a channel with one or more entry openings of a second type positioned in the outer walls of said housing; wherein said channel leads to an entry opening of a first type; and wherein said channel comprises a side branch leading to both of said entry openings of a first type, and wherein a monitoring means is positioned in or below said side branch's ceiling.

The advantage with a first insert plate that can be inserted into the entry opening of a first type is that the user can choose to restrict certain species from entering the feeding and/or trap compartment and at the same time allowing a target species to enter. This is important if the user has installed e.g., a mouse trap inside the compartment. If a rat enters, there is a substantial risk that the mouse trap will only invalidate the rat rather than killing it. In this way, the housing may be used for different targets. The first insert plate may be made from any suitable material that a rodent is not prone to gnaw in, such as metal, preferably steel, plastic, or composite materials.

The housing may be made from any suitable material, such as metal, plastic, composites, concrete, or the like.

The first retaining means adapted for removably receiving the first insert plate across the entry opening of a first type may e.g., be a pair of slits flanking the entry opening of a first type (e.g., mounted in the frame) and adapted for receiving the first insert plate. Alternatively, the first retaining means may be a pair of magnets flanking the entry opening of a first type. In the latter situation, the first insert plate is made from a magnetic material or small magnets may be integrated into or attached to the plate.

The housing comprises a plurality of feeding and/or trap compartments, such as two or three compartments, each with its own entry opening of a first type. This setup allows for targeting different target species with the same bait and/or trap station. As an example, one compartment may comprise a mouse trap, and another compartment may comprise a rat trap. The compartment comprising the mouse trap has a first insert plate mounted across its entry opening. The first insert plate has a cut-out sized and shaped to prevent a rat from passing therethrough, and at the same time allowing a mouse to pass. Such a cut-out may have a diameter of 5-18 mm, and preferably a diameter of 10-17 mm, and even more preferably a diameter of 15-17 mm. The compartment comprising the rat trap may also have a first insert plate mounted across its entry opening. This first insert plate has a cut-out sized and shaped to prevent a bird and/or a squirrel from passing therethrough, and at the same time allowing a rat to pass. Such a cut-out may have a diameter of 19-30 mm, and preferably a diameter of 20-28 mm, and even more preferably a diameter of 22-24 mm.

In one or more embodiments, bait and/or trap station comprises a first insert plate with a cut-out having a diameter of 5-18 mm, and preferably a diameter of 10-17 mm, and even more preferably a diameter of 15-17 mm.

In one or more embodiments, bait and/or trap station comprises a first insert plate with a cut-out having a diameter of 19-30 mm, and preferably a diameter of 20-28 mm, and even more preferably a diameter of 22-24 mm.

The housing comprises a first and a second feeding and/or trap compartment, each with respective entry openings of a first type; wherein each opening of a first type comprises a first retaining means adapted for removably receiving a first insert plate across the entry opening of a first type.

Often, a scent attractant is positioned within the feeding and/or trap compartment to lure the target species therein. In such a situation, it may be an advantage to allow as much as possible of the scent to escape through the first insert plate. In one or more embodiments, the first insert plate is perforated with holes and/or slots. Preferably, the holes have a diameter of 3-8 mm, preferably about 5 mm, such as within the range of 4-7 mm, e.g., 5-6 mm. Preferably, the slots have a width of 3-8 mm, preferably about 5 mm, such as within the range of 4-7 mm, e.g., 5-6 mm.

It may be an advantage if the rodent can enter the housing through a channel within which it may hide. The channel may be without a floor in order to make the target species feel safe by being able to move around, hide, and rest on a familiar surface. The housing further comprises a channel with one or more entry openings of a second type positioned in the outer walls of the housing; wherein the channel leads to an entry opening of a first type. Preferably, the channel is without a floor.

In one or more embodiments, the entry openings of a second type are sized and configured to leave an opening with a free height of at least 40 mm, such as within the range of 40-100 mm, e.g., at least 45 mm, such as within the range of 45-95 mm, e.g., at least 50 mm, such as within the range of 50-90 mm, e.g., at least 55 mm, such as within the range of 55-85 mm, e.g., at least 60 mm, such as within the range of 60-80 mm, e.g., at least 65 mm, such as within the range of 70-75 mm, e.g., at least 70 mm.

In one or more embodiments, the entry openings of a second type are sized and configured to leave an opening with a clear width of at least 40 mm, such as within the range of 40-100 mm, e.g., at least 45 mm, such as within the range of 45-95 mm, e.g., at least 50 mm, such as within the range of 50-90 mm, e.g., at least 55 mm, such as within the range of 55-85 mm, e.g., at least 60 mm, such as within the range of 60-80 mm, e.g., at least 65 mm, such as within the range of 70-75 mm, e.g., at least 70 mm.

The bait and/or trap station further comprises a monitoring means. The housing comprises a plurality of feeding and/or trap compartments, and the housing's channel comprises a side branch leading to a plurality, such as two or three, of the entry openings of a first type, and wherein a monitoring means is positioned in or near the side branch's ceiling. This configuration minimizes the number of needed monitoring means to a single unit. As an example, the monitoring means may be a shock sensor and/or a motion sensor. The shock sensor senses if a trap has been activated, and the motion sensor merely registers activity within the housing. The motion sensor is particularly suitable when the compartments contains anticoagulants, poisoned bait, or toxic or non-toxic bait or scent blocks, but is also suitable to determine general activity within the housing.
In the present context, the monitoring means may be an infrared sensor, a laser sensor, or an optical sensor. However, this is not intended to be limiting. It is also envisaged as within the scope of the invention that the sensor may be a mechanical sensor configured to detect the presence of the target species, such as a rat or mouse, by physical contact of the species with the sensor. For example, the sensor may be a pressure plate or similar component, or assembly configured to detect the weight of the species. Alternatively, the sensor may be a component or assembly configured to be moved by the species, such as by being pulled, tugged at, or otherwise physically interacted with by the species. Advantageously a signal indicating the activation of the monitoring means is transmitted wirelessly to a receiving device. Hereby wired electrical connections between the bait station and a communication device, placed at a distance from the bait station, may be avoided.

In the present context, the term poisoned bait covers all types of baits suitable for e.g., killing a mouse or rat, such as rodenticidal bait, anticoagulants, metal phosphides, calciferols, and the like.

In one or more embodiments, bait and/or trap station further comprises a visual detector positioned in the channel, and/or feeding and/or trap compartment(s). A visual detector may e.g., be fluorescent powder that adheres to the pests paws. A track is thereby formed towards the pest's nest that can be visualised by a lamp emitting e.g., a UV light. The visual detector may be combined with a bait, toxic or non-toxic, positioned within the feeding compartment. When both the bait and the visual detector is positioned within the feeding compartment it is secured that no bycatches come into contact with the visual detector.

In order to further reduce the non-target poisonings and bycatches, it may be an advantage to equip the entry openings of a first type with a gnaw through plate across said entry opening. Thereby, only rodents are prone to enter the compartments. In one or more embodiments, the bait and/or trap station further comprises a second insert plate of a material suitable for a rodent, such as a rat and/or a mouse, to gnaw through. Preferably, the entry opening of a first type comprises a second retaining means adapted for removably receiving the second insert plate across the entry opening of a first type.
A second insert plate of a material suitable for a rat and/or mouse to gnaw through may be of many types, such as a material comprising or consisting of a polymer material, a starch material, a lignin material, such as cardboard, a protein material, or the like. Preferably, the material is un-dissolvable by snails. To secure that it is only the target species that gnaw in the second insert plate, it is preferably positioned behind the first insert plate. Hence, a species that has entered the housing will first encounter the first insert plate. In one or more embodiments, the first insert plate is positioned in front of the second insert plate.

In one or more embodiments, the bait station comprises means for securing the housing to the ground and/or to a wall near the ground, to avoid that the bait station can be turned on its side. Such means may be bolts or earth anchors.

In one or more embodiments, a part of the side or top wall is configured as a door/lid with a lock for restricted access to the feeding compartment located within the housing.

In one or more embodiments, the monitoring means is a wireless monitoring means configured to transmit monitoring data to a receiving unit.

In one or more embodiments, a part of the housing comprises a metal wall or metal lid; and wherein the bait and/or trap station further comprises a wireless monitoring means; wherein the metal lid or metal wall is configured as a part of the wireless monitoring means' antenna means. This configuration allows the metal lid or metal wall to serve as an amplifier of an incoming signal for the monitoring means, such as a sleep signal or a request signal from a control unit. Additionally, the metal lid or metal wall simply serves as the antenna for transmitting monitoring data to a control unit.

A second aspect of the present invention relates to a bait and/or trap station comprising:
- a housing with a feeding and/or trap compartment with an entry opening of a first type, and a metal lid or metal wall; and
- a wireless monitoring means;
wherein the metal lid or metal wall is configured as a part of the wireless monitoring means' antenna means.

The advantage of this configuration is that the metal lid or metal wall may serve as an amplifier of an incoming signal for the monitoring means, such as a sleep signal or a request signal from a control unit. Additionally, the metal lid or metal wall simply serves as the antenna for transmitting monitoring data to a control unit.

In one or more embodiments, the housing further comprises a channel with one or more entry openings of a second type positioned in the outer walls of the housing; wherein the channel leads to an entry opening of a first type. Preferably, the channel is without a floor. In one or more embodiments, the housing comprises a plurality of feeding and/or trap compartments, the channel comprises a side branch leading to a plurality, such as two or three, of the entry openings of a first type, and wherein a monitoring means is positioned in or near the side branch's ceiling.

As used in the specification and the appended claims, the singular forms "a", "an", and "the" include plural referents unless the context clearly dictates otherwise. Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about", it will be understood that the particular value forms another embodiment.

It should be noted that embodiments and features described in the context of one of the aspects of the present invention also apply to the other aspects of the invention.

### Brief description of the figures

Figure 1 is a perspective view of a bait and/or trap station in accordance with various embodiments of the invention;
Figure 2 is a perspective view of a bait and/or trap station in accordance with various embodiments of the invention, and where the top lid and dosage unit have been removed;
Figure 3 shows the bait and/or trap station of Figure 2, where a part of it has been removed to show a first insert plate;
Figure 4 shows a top view of the bait and/or trap station of Figure 2, where a monitoring means is mounted;
Figure 5 shows the bait and/or trap station, where a part of it has been removed to show an inserted bait or scent block; and
Figure 6 shows a top view of the bait and/or trap station, where two snap traps are inserted into the compartment.

### References

- 100: Bait and/or trap station
- 200: Housing
- 210: Feeding and/or trap compartment
- 212: Entry opening of a first type
- 214: First retaining means
- 216: Second retaining means
- 220: Feeding and/or trap compartment
- 222: Entry opening of a first type
- 224: First retaining means
- 226: Second retaining means
- 230: Channel
- 232: Entry opening of a second type
- 234: Side branch
- 300: First insert plate
- 310: Cut-out
- 400: Monitoring means
- 500: Support
- 600: Bait or scent block
- 610: Rod
- 700: Snap trap

### Detailed Description of the Invention

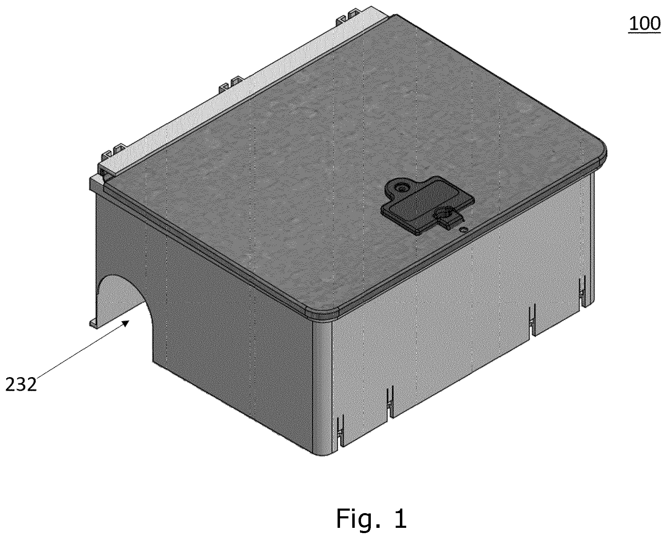

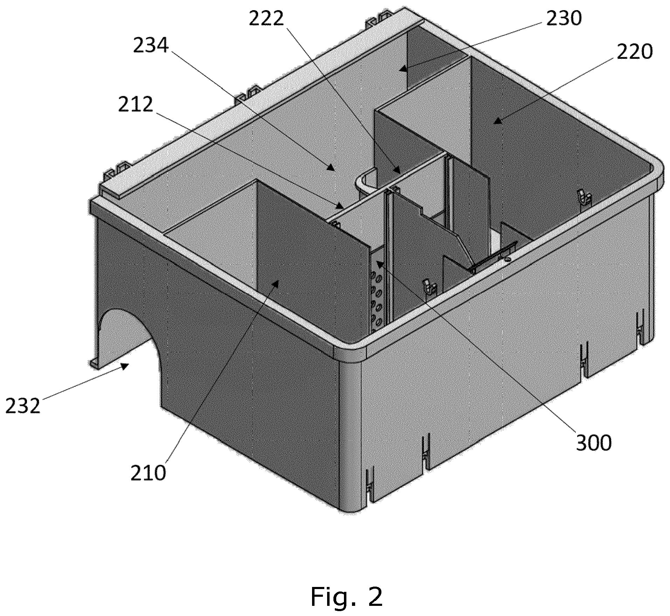

Figure 1 is a perspective view of a bait and/or trap station in accordance with various embodiments of the invention. In Figure 2, the top lid and an optional monitoring means have been removed. The housing 200 comprises a first 210 and a second 220 feeding and/or trap compartment, each with respective entry openings 212, 222 of a first type. The housing 200 further comprises a channel 230 with two entry openings 232 (only one can be seen in this view) of a second type positioned in the outer walls of the housing 200. The channel 230 comprises a side branch 234 leading to both the entry openings 212, 222 of a first type.

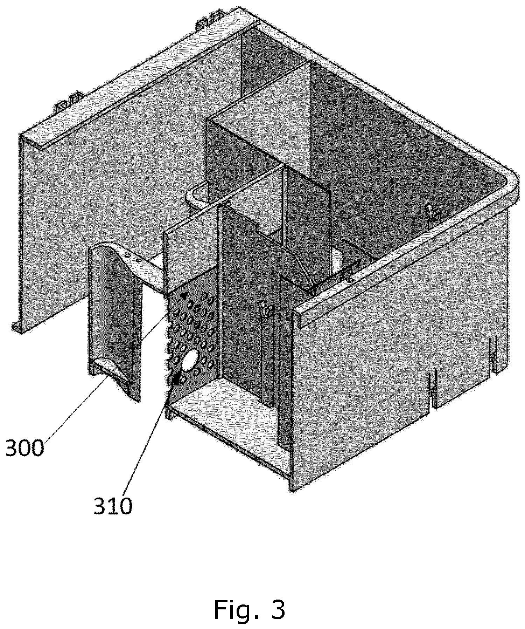

Figure 3 shows the bait and/or trap station of Figure 2, where a part of it has been removed to show a first insert plate 300 positioned across the entry opening 212 of a first type.

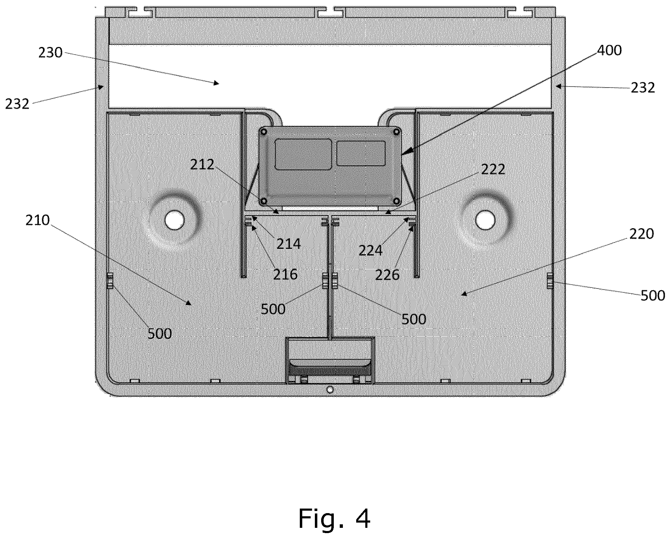

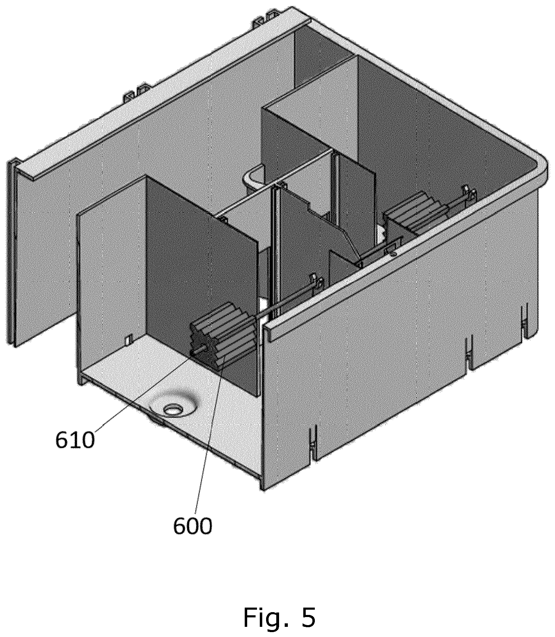

Figure 4 shows a top view of the bait and/or trap station of Figure 2, where a monitoring means 400 is mounted, and the first insert plate(s) removed. Both entry openings 212, 222 of a first type comprises a first retaining means 214, 224 adapted for removably receiving a first insert plate, such that the first insert plate, when positioned therein, is positioned across the respective entry opening 212, 222. The bait and/or trap station may also comprise a second insert plate (not shown) of a material suitable for a rat and/or mouse to gnaw through. The entry openings 212, 222 of a first type are here shown with a second retaining means 216, 226 adapted for removably receiving the second insert plate across the entry opening 212, 222 of a first type.
Two pairs of supports 500 are also shown. Each pair of supports 500 are adapted for receiving a rod with a bait or scent block mounted thereto. This is exemplified in Figure 5.

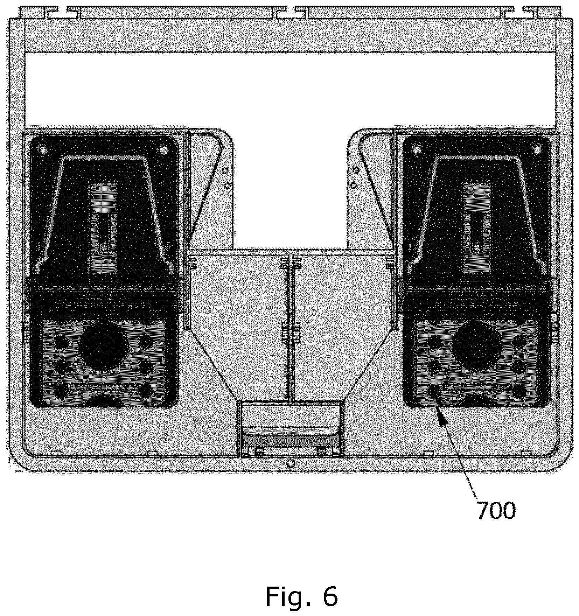

Figure 6 shows a top view of the bait and/or trap station, where two snap traps 700 are inserted into each compartment.

## Claims

1. A bait and/or trap station (100) comprising:
- a housing (200) with a feeding and/or trap compartment (210) with an entry opening (212) of a first type;
wherein the bait and/or trap station (100) further comprises an a first insert plate (300) having a cut-out (310) sized and shaped to prevent a specific target species from passing therethrough, and at the same time allowing other species to pass; wherein the entry opening (212) of a first type comprises a first retaining means (214) adapted for removably receiving the first insert plate (300) across the entry opening (212) of a first type;
wherein said housing (200) comprises a first (210) and a second (220) feeding and/or trap compartment, each with respective entry openings (212, 222) of a first type; wherein each opening (212, 222) of a first type comprises a first retaining means (214, 224) adapted for removably receiving the first insert plate (300) across the entry opening (212, 222) of a first type;
**characterized in that** said housing (200) further comprises a channel (230) with one or more entry openings (232) of a second type positioned in the outer walls of said housing (200); wherein said channel (230) leads to an entry opening (212, 222) of a first type; and wherein said channel (230) comprises a side branch (234) leading to both of said entry openings (212, 222) of a first type, and
wherein a monitoring means (400) is positioned in or below said side branch's ceiling.

2. The bait and/or trap station (100) according to claim 1, further comprising a second insert plate of a material suitable for a rat and/or mouse to gnaw through; wherein the entry opening (212, 222) of a first type comprises a second retaining means (216, 226) adapted for removably receiving said second insert plate across said entry opening (212, 222) of a first type.

3. The bait and/or trap station (100) according to claim 2, wherein said first insert plate (300) is positioned in front of said second insert plate.

4. The bait and/or trap station (100) according to any one of the claims 1-3, wherein said first (300) and/or said second insert plate is perforated with holes and/or slots.

5. The bait and/or trap station (100) according to claim 4, wherein said holes have a diameter of 3-8 mm, preferably about 5 mm and/or wherein said slots have a width of 3-8 mm, preferably about 5 mm.

6. The bait and/or trap station (100) according to any one of the claims 1-5, wherein a part of the housing comprises a metal wall or metal lid; and wherein said bait and/or trap station further comprises a wireless monitoring means; wherein said metal lid or metal wall is configured as a part of said wireless monitoring means' antenna means.

7. The bait and/or trap station (100) according to any one of the claims 1-6, wherein said cut-out (310) have a width of 5-18 mm or 19-30 mm.

## Patentansprüche

1. Köder- und/oder Fallenstation (100), umfassend:
- ein Gehäuse (200) mit einem Fütterungs- und/oder Fallenfach (210) mit einer Eintrittsöffnung (212) eines ersten Typs;
wobei die Köder- und/oder Fangstation (100) ferner eine erste Einsatzplatte (300) mit einem Ausschnitt (310) umfasst, der bemessen und geformt ist, um zu verhindern, dass eine bestimmte Zieltierart hindurchgeht, und gleichzeitig anderen Tierarten den Durchgang zu ermöglichen; wobei die Eintrittsöffnung (212) eines ersten Typs ein erstes Haltemittel (214) umfasst, das zum entfernbaren Aufnehmen der ersten Einsatzplatte (300) über die Eintrittsöffnung (212) eines ersten Typs angepasst ist;
wobei das Gehäuse (200) ein erstes (210) und ein zweites (220) Fütterungs- und/oder Fallenfach jeweils mit entsprechenden Eintrittsöffnungen (212, 222) eines ersten Typs umfasst; wobei jede Öffnung (212, 222) eines ersten Typs ein erstes Haltemittel (214, 224) umfasst, das zum entfernbaren Aufnehmen der ersten Einsatzplatte (300) über die Eintrittsöffnung (212, 222) eines ersten Typs angepasst ist;
**dadurch gekennzeichnet, dass** das Gehäuse (200) ferner einen Kanal (230) mit einer oder mehreren Eintrittsöffnungen (232) eines zweiten Typs umfasst, die in den Außenwänden des Gehäuses (200) positioniert sind; wobei der Kanal (230) zu einer Eintrittsöffnung (212, 222) eines ersten Typs führt; und wobei der Kanal (230) einen Seitenzweig (234) umfasst, der zu beiden der Eintrittsöffnungen (212, 222) eines ersten Typs führt, und wobei ein Überwachungsmittel (400) in oder unter der Decke des Seitenzweigs positioniert ist.

2. Köder- und/oder Fallenstation (100) nach Anspruch 1, ferner umfassend eine zweite Einsatzplatte aus einem zum Durchnagen für eine Ratte und/oder Maus geeigneten Material; wobei die Eintrittsöffnung (212, 222) eines ersten Typs ein zweites Haltemittel (216, 226) umfasst, das zum entfernbaren Aufnehmen der zweiten Einsatzplatte über die Eintrittsöffnung (212, 222) eines ersten Typs angepasst ist.

3. Köder- und/oder Fallenstation (100) nach Anspruch 2, wobei die erste Einsatzplatte (300) vor der zweiten Einsatzplatte positioniert ist.

4. Köder- und/oder Fallenstation (100) nach einem der Ansprüche 1-3, wobei die erste (300) und/oder die zweite Einsatzplatte mit Löchern und/oder Schlitzen perforiert ist.

5. Köder- und/oder Fallenstation (100) nach Anspruch 4, wobei die Löcher einen Durchmesser von 3-8 mm, bevorzugt etwa 5 mm, aufweisen und/oder wobei die Schlitze eine Breite von 3-8 mm, bevorzugt etwa 5 mm, aufweisen.

6. Köder- und/oder Fallenstation (100) nach einem der Ansprüche 1-5, wobei ein Teil des Gehäuses eine Metallwand oder einen Metalldeckel umfasst; und wobei die Köder- und/oder Fallenstation ferner ein drahtloses Überwachungsmittel umfasst; wobei der Metalldeckel oder die Metallwand als Teil des Antennenmittels des drahtlosen Überwachungsmittels konfiguriert ist.

7. Köder- und/oder Fangstation (100) nach einem der Ansprüche 1-6, wobei der Ausschnitt (310) eine Breite von 5-18 mm oder 19-30 mm aufweist.

## Revendications

1. Station d'appât et/ou de piège (100) comprenant :
- un boîtier (200) avec un compartiment d'alimentation et/ou de piège (210) avec une ouverture d'entrée (212) d'un premier type ;
dans laquelle la station d'appât et/ou de piège (100) comprend en outre une première plaque d'insertion (300) ayant une découpe (310) dimensionnée et formée pour empêcher une espèce cible spécifique de passer à travers, et en même temps permettant à d'autres espèces de passer ; dans laquelle l'ouverture d'entrée (212) d'un premier type comprend un premier moyen de retenue (214) adapté pour recevoir de manière amovible la première plaque d'insertion (300) à travers l'ouverture d'entrée (212) d'un premier type ;
dans laquelle ledit boîtier (200) comprend un premier (210) et un second (220) compartiment d'alimentation et/ou de piège, chacun avec des ouvertures d'entrée respectives (212, 222) d'un premier type ; dans laquelle chaque ouverture (212, 222) d'un premier type comprend un premier moyen de retenue (214, 224) adapté pour recevoir de façon amovible la première plaque d'insertion (300) à travers l'ouverture d'entrée (212, 222) d'un premier type ;
**caractérisée en ce que** ledit boîtier (200) comprend en outre un canal (230) avec une ou plusieurs ouvertures d'entrée (232) d'un second type positionnées dans les parois extérieures dudit boîtier (200) ; dans laquelle ledit canal (230) mène à une ouverture d'entrée (212, 222) d'un premier type ; et dans laquelle ledit canal (230) comprend une branche latérale (234) conduisant aux deux desdites ouvertures d'entrée (212, 222) d'un premier type, et dans laquelle un moyen de surveillance (400) est positionné dans ou sous le plafond de ladite branche latérale.

2. Station d'appât et/ou de piège (100) selon la revendication 1, comprenant en outre une seconde plaque d'insertion d'un matériau adapté pour qu'un rat et/ou une souris puisse le ronger ; dans laquelle l'ouverture d'entrée (212, 222) d'un premier type comprend un second moyen de retenue (216, 226) adapté pour recevoir de manière amovible ladite seconde plaque d'insertion à travers ladite ouverture d'entrée (212, 222) d'un premier type.

3. Station d'appât et/ou de piège (100) selon la revendication 2, dans laquelle ladite première plaque d'insertion (300) est positionnée devant ladite seconde plaque d'insertion.

4. Station d'appât et/ou de piège (100) selon l'une quelconque des revendications 1 à 3, dans laquelle ladite première (300) et/ou ladite seconde plaque d'insertion est perforée de trous et/ou de fentes.

5. Station d'appât et/ou de piège (100) selon la revendication 4, dans laquelle lesdits trous ont un diamètre de 3 à 8 mm, de préférence d'environ 5 mm et/ou dans laquelle lesdites fentes ont une largeur de 3 à 8 mm, de préférence d'environ 5 mm.

6. Station d'appât et/ou de piège (100) selon l'une quelconque des revendications 1 à 5, dans laquelle une partie du boîtier comprend une paroi métallique ou un couvercle métallique ; et dans laquelle ladite station d'appât et/ou de piège comprend en outre un moyen de surveillance sans fil ; dans laquelle ledit couvercle métallique ou ladite paroi métallique est configuré comme une partie d'un moyen d'antenne dudit moyen de surveillance sans fil.

7. Station d'appât et/ou de piège (100) selon l'une quelconque des revendications 1 à 6, dans laquelle ladite découpe (310) a une largeur de 5 à 18 mm ou de 19 à 30 mm.
